# EUROPEAN PATENT APPLICATION

(11) **EP 0 747 436 A2**
(43) Date of publication of application: **11.12.1996**
(21) Application number: 96304164.5
(22) Date of filing: 06.06.1996
(51) Int. Cl.: C08L 71/12, C08L 77/00

(54) **Compositions of poly(phenylene ether) and polyamide resins**

(30) Priority: 07.06.1995 US 483025
(71) Applicant: GENERAL ELECTRIC COMPANY, Schenectady, NY 12345 (US)
(72) Inventor: Peters, Edward Norman, Lenox, Massachusetts 01240 (US)
(74) Representative: Szary, Anne Catherine

(57) **Abstract**

Thermoplastic compositions comprising blends of poly(phenylene ether) resins and polyamide resins with a melt strength enhancing amount of a multi-valent metal salt are described herein. The compositions may further comprise at least one flow promoter, impact modifier and/or at least one reinforcing filler.

## Description

This invention relates to poly(phenylene ether)-polyamide compositions which exhibit enhanced properties, such as improved melt strength.

### Brief Description of the Related Art

Poly(phenylene ether) resins (referred to hereafter as "PPE") are commercially attractive materials because of their unique combination of physical, chemical, and electrical properties. Furthermore, the combination of these resins with polyamide resins into compatibilized blends results in additional overall properties such as chemical resistance, high strength and high flow. Examples of such compatibilized blends can be found in U.S. Patents 4,315,086 (Ueno, et al); 4,659,760 (van der Meer); and 4,732,938 (Grant, et al). The properties of these blends can be further enhanced by the addition of various additives such as impact modifiers, flame retardants, light stabilizers, processing stabilizers, heat stabilizers, antioxidants and fillers.

The physical properties of PPE/polyamide blends make them attractive for a variety of end-use articles in the automotive market, especially for under hood components. Many of these components are manufactured by processes such as blow molding or thermoforming. These part conversion techniques require that the material have a high melt strength in order to obtain a uniform wall thickness in the final part and to allow an economically feasible molding window cycle.

It is therefore apparent that a need exists for PPE-polyamide compositions that have improved melt strength and which do not substantially detract from other important properties, such as impact and tensile strength.

### SUMMARY OF THE INVENTION

The needs discussed above have been generally satisfied by the discovery of an improved thermoplastic composition which comprises:
a) a poly(phenylene ether) resin;
b) a polyamide resin; and
c) an amount of a multi-valent metal salt effective for enhancing the melt strength of the composition.

The description which follows provides further details regarding this invention.

### DETAILED DESCRIPTION OF THE INVENTION

The PPE employed in the present invention are known polymers comprising a plurality of structural units of the formula (I): 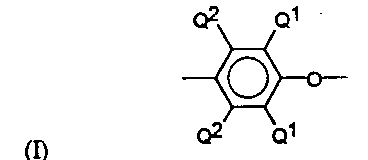 wherein each structural unit may be the same or may be different, and in each structural unit, each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Most often, each Q¹ is alkyl or phenyl, especially C₁₋₄ alkyl, and each Q² is hydrogen.

Both homopolymer and copolymer PPE are included. The preferred homopolymers are those containing 2,6-dimethyl-1,4-phenylene ether units. Suitable copolymers include random copolymers containing, for example, such units in combination with 2,3,6-trimethyl-1,4-phenylene ether units. Also included are PPE containing moieties prepared by grafting vinyl monomers or polymers such as polystyrenes and elastomers, as well as coupled PPE in which coupling agents such as low molecular weight polycarbonates, quinones, heterocycles and formals undergo reaction in known manner with the hydroxy groups of two PPE chains to produce a higher molecular weight polymer, provided a substantial proportion of free OH groups remains.

The PPE generally has a number average molecular weight within the range of about 3,00040,000 and a weight average molecular weight within the range of about 20,000-80,000, as determined by gel permeation chromatography. Its intrinsic viscosity is most often in the range of about 0.15-0.6 dl./g., as measured in chloroform at 25°C.

The PPE are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Particularly useful PPE for many purposes are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A substantial proportion of the polymer molecules, typically constituting as much as about 90% by weight of the polymer, may contain at least one of said aminoalkyl-containing and 4-hydroxybiphenyl end groups.

It will be apparent to those skilled in the art from the foregoing that the PPE contemplated for use in the present invention include all those presently known, irrespective of variations in structural units or ancillary chemical features.

The compositions of the present invention also contain a compatibilizer for the poly(phenylene ether) resin and the polyamide resin. Appropriate compatibilizers are those which affect the compatibility of the PPE with the various components of the blend. Compatibility is meant to include the minimization of gross phase separation between the components of the blend (i.e., the PPE and the polyamide). Indicators of improved compatibilization include, for example, increased tensile elongation, reduced delamination tendency, increased ductility and/or improved phase morphology stabilization. Improving the compatibilization between the blend components determines, in part, the desirable physical properties of the blend.

For some embodiments of the present invention, it is preferable for at least some of the PPE to be a "compatibilizing PPE." One way to prepare a compatibilizing PPE is to functionalize the PPE by reacting the PPE with at least one compound having both:
(i) a carbon-carbon double bond or a carbon-carbon triple bond and
(ii) a carboxylic acid, acid anhydride, acid amide, imido, carboxylic acid ester, epoxy, amino, hydroxyl or carboxylic acid ammonium salt.
These compounds are sometimes referred to as compatibilizers or functionalizers and the resultant PPE's are commonly referred to as compatibilizing PPE or functionalized PPE. Typical compounds used to accomplish the functionalization include: maleic anhydride, fumaric acid, maleimides such as N-phenylmaleimide and 1,4-phenylene-bis-methylene-α,α'-bismaleimide, maleic hydrazide, methylnadic anhydride, fatty oils (e.g., soybean oil, tung oil, linseed oil, sesame oil), unsaturated carboxylic acids such as acrylic, crotonic, methacrylic acid and oleic acid, unsaturated alcohols such as allyl alcohol and crotyl alcohol and unsaturated amines such as allylamine and trialkyl amine salts of unsaturated acids such as triethylammonium fumarate and tri-n-butylammonium fumarate. Such typical reagents for preparing a useful functionalized polyphenylene ether are described in U.S. Patent Nos. 4,315,086, 4,755,566, and 4,888,397, which are incorporated herein by reference.

Non-polymeric aliphatic polycarboxylic acids are also useful for preparing an appropriate compatibilizing PPE. Included in the group of species, also known as compatibilizers or functionalizers, are the aliphatic polycarboxylic acids, acid esters and acid amides represented by the formula (II):

(II) (R^{I}O)ₘR(COOR^{II})ₙ(CONR^{III}R^{IV})ₛ

wherein R is a linear or branched chain, saturated aliphatic hydrocarbon of from 2 to 20, preferably 2 to 10, carbon atoms; R^{I} is selected from the group consisting of hydrocarbon or an alkyl, aryl, acyl, or carbonyl dioxy group of 1 to 10, preferably 1 to 6, most preferably 1 to 4, carbon atoms, especially preferred is hydrogen; each R^{II} is independently selected from the group consisting of hydrogen or an alkyl or aryl group of from 1 to 20 carbon atoms preferably from 1 to 10 carbon atoms; each R^{III} and R^{IV} is independently selected from the group consisting essentially of hydrogen or an alkyl or aryl group of from 1 to 10, preferably from 1 to 6, most preferably 1 to 4, carbon atoms; m is equal to 1 and (n+s) is greater than or equal to 2, preferably equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, Rand R^{IV} cannot be aryl when the respective substituent has less than 6 carbon atoms.

Illustrative of suitable polycarboxylic acids are citric acid, malic acid, and agarcic acid; including the various commercial forms thereof, such as, for example, the anhydrous and hydrated acids. Illustrative of acid esters useful herein include, for example, acetyl citrate and mono-and/or di- stearyl citrates and the like. Suitable acid amides useful herein include for example N,N'- diethyl citric acid amide; N,N'-dipropyl citric acid amide; N-phenyl citric acid amide; N-dodecyl citric acid amide; N,N'-didodecyl citric acid amide and N-dodecyl malic acid amide. Derivatives of the foregoing polycarboxylic acids are also suitable for use in the practice of the present invention. Suitable functionalizing compounds can be found in U.S. Patent Nos. 4,315,086, 4,755,566 and 5,000,897, which are incorporated herein by reference.

The amount of the above mentioned compatibilizers that is required to appropriately functionalize the PPE is that which is sufficient to improve the compatibility between the various components in the composition. Indications of improved compatibility include resistance to delamination, improved physical properties such as increased tensile and/or impact properties and/or a stabilized morphology between the blend component phases under static or low shear conditions. It is thought that reactions can occur between some of the components of the composition, for example, between the compatibilizing PPE and the polyamide resin which results in the formation of PPE-nylon copolymers. It is believed that the PPE-nylon copolymers are in part responsible for many of the property changes which are observed in compositions containing a compatibilizer present in an effective amount when compared to the same composition not containing a compatibilizer or containing a compatibilizer in an amount which is not effective to improve the compatibility between the blend components. An effective amount of the above mentioned compatibilizers is generally up to about 8% by weight, and is preferably from about 0.05% to about 4% by weight; based on the amount of the PPE. In the most preferred embodiments, the amount of the compatibilizer is in the range of about 0.1% to about 3% by weight based on the amount of the PPE.

Another useful method for preparing an appropriate compatibilizing PPE resin involves reacting a PPE resin with a compound containing an acyl functional group. Non-limiting examples include chloroformyl succinic anhydride, chloroethanoyl succinic anhydride, trimellitic anhydride acid chloride, 1-acetoxy-acetyl-3,4-dibenzoic acid anhydride, and terephthalic acid acid chloride. Additional examples and methods to prepare such functionalized PPE can be found in U.S. Patent Nos. 4,600,741 and 4,642,358, each of which is incorporated herein by reference.

Various chloroepoxytriazine compounds are also useful for preparing an appropriate compatibilizing PPE resin. Illustrative compounds of this type include 2-chloro-4,6-diglycidoxy-1,3,5-triazine; 2-chloro-4-(n-butoxy)-6-glycidoxy-1,3,5-triazine; and 2-chloro-4-(2,4,6-trimethylphenoxy)-6-glycidoxy-1,3,5-triazine, also known as mesityl glycidyl chlorocyanurate (MGCC.). Methods to prepare these compounds and functionalized PPE resins can be found in U.S. Patent Nos. 4,895,945, 5,041,504, 5,089,566 and 5,096,979, all of which are incorporated herein by reference.

Polyamides, also known as nylons, which can be used in the present invention include any polyamides and polyamide copolymers known in the art Examples of such polyamides are those prepared by the polymerization of monomers selected from the following group:
(i) monoamino-monocarboxylic acids having at least 2 carbon atoms between the amino and carboxylic acid group;
(ii) cyclic or lactam structures of (i);
(iii) substantially equimolar proportions of a diamine which contains at least 2 carbon atoms between the amino groups and a dicarboxylic acid; and
(iv) various combinations of monoaminocarboxylic acids, lactams, diamines and dicarboxylic acids.

The term "substantially equimolar" proportions includes both strictly equimolar proportions and slight departures therefrom which are involved in conventional techniques for stabilizing the viscosity of the resultant polyamides. The balance of the monomer proportions can also be adjusted so as to control the acid to amine endgroup ratio. The dicarboxylic acid may be used in the form of a functional derivative thereof, for example, an ester or acid chloride.

Examples of the aforementioned monoamino monocarboxylic acids or lactams thereof which are useful in preparing the polyamides include those compounds containing from 2-16 carbon atoms between the amino and carboxylic acid groups, said carbon atoms forming a ring containing the -CO-NH- group in the case of lactam. As particular examples of monocarboxylic acids and lactams there may be mentioned ε-aminocaproic acid, butyrolactam, pivalolactam, ε-caprolactam, capryllactam, enentholactam, undecanolactam, dodecanolactam and 3-and 4-aminobenzoic acids.

Diamines suitable for use in the preparation of the polyamides include the straight chain and branched chain alkyl, aryl and alkaryl diamines. Illustrative diamines are trimethylenediamine, tetramethylenediamine, pentamethylenediamine, octamethylenediamine, hexamethylenediamine (which is often preferred), trimethylhexamethylenediamine, m-phenylenediamine and m-xylylenediamine. Monomers which have more than two amino groups can also be utilized to make various branched polyamide materials.

The dicarboxylic acids may be represented by the following formula (III): 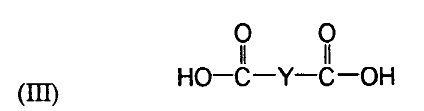 wherein Y is a divalent aliphatic or aromatic group containing at least 2 carbon atoms. Examples of aliphatic acids are sebacic acid, octadecanedioic acid, suberic acid, glutaric acid, pimelic acid and adipic acid. Monomers which have more than two carboxylic acid groups can also be utilized to make various branched polyamide materials.

Polyamides suitable for use in the present invention may be made by any known method. The polyamides can have linear or branched structures or be mixtures of linear and branched structures. They preferably contain a substantial proportion of amine end groups. Polyamides in which the amine end group concentration is at least about 40 meq./g. are particularly useful. In many instances, it is preferred that the amine to acid endgroup ratio to be about 1 or greater than 1. It is also within the scope of the invention, however, to employ predominantly carboxylic acid-terminated polyamides.

Both crystalline and amorphous polyamides may be employed, with the crystalline species often being preferred by reason of their solvent resistance. Typical examples of the polyamides include, for example, nylon-6 (polycaprolactam), nylon-6,6 (polyhexamethylene adipamide), nylon-11, nylon-12, nylon-6,3, nylon-6,4, nylon-6,10 and nylon-6,12 as well as polyamides from terephthalic acid and/or isophthalic acid and trimethylhexamethylenediamine; from adipic acid and m-xylylenediamines; from adipic acid, azelaic acid and 2,2 bis(p-aminophenyl)propane or 22-bis-(p-aminocyclohexyl)propane and from terephthalic acid and 4,4' diaminodicyclohexylmethane. Mixtures and/or copolymers of two or more of the foregoing polyamides or prepolymers thereof, respectively, are also within the scope of the present invention. Preferred polyamides are nylon-6, nylon-4,6, nylon-6,6, nylon-11 and nylon-12, most preferably nylon-6,6 and nylon-6.

The weight ratio of PPE to polyamide may vary from about 20:80 to about 80:20, with a ratio of about 40:60 to 60:40 being preferred.

The polymer mixture according to the invention comprises as the third constituent a multi-valent metal salt The term multi-valent metal refers to metals whose valence is at least two. It is thought that the multi-valent metal salt interacts with the carboxylic acid endgroups of the polyamide in some manner to form what could be considered ionic bonding linkages and thus increase the effective chain length of the polyamide. Metals that have only a single valency would not be capable of forming such ionic linkages between polymer chains. The exact manner in which the multi-valent metal salt operates is speculative and the present invention is not dependent on the mechanism of the metal salt interaction.

It is important for the melting temperature of the metal salt to be lower than the compounding temperature of the polymer mixture. When the melting temperature is equal to or higher than the compounding temperature, the metal salt is less effective for improving the melt strength. The compounding temperature is the temperature at which the constituents of the polymer mixture according to the invention are mixed to a more or less homogeneous mass in the melted condition or a similar condition. The compounding temperature generally is above 550°F, usually between approximately 550°F and 650°F.

Suitable metal salts are inorganic or organic salts, more preferably metal salts of organic acids. Suitable organic acids are saturated and unsaturated aliphatic carboxylic acids, aromatic carboxylic acids, aliphatic and aromatic sulphonic or phosphonic acids and salts of alkyl hydrogen sulfates, and mixtures thereof.

Specific organic acids include, but are not restricted to: oxide, benzoic, palmitic, lauric, acetic, stearic, gluconic, as well as dodecyl benzene sulphonic acids.

Suitable metal salts may be taken from a broad range of metals provided that the salt has a melting temperature lower than the polymer mixture compounding temperature. Metals such as calcium, aluminum and zinc are preferred but this does not preclude metals such as barium, beryllium, magnesium, copper, cobalt, and iron.

In particular metal salts of stearic acid and oxides are preferred. Mixtures of salts can also be utilized.

The amount of the metal salt utilized is generally an amount effective to increase the blow molding characteristics of the composition. Residual catalytic metals are generally present in the PPE from the PPE polymerization process but the level of residual metals is less than an amount effective to increase the blow molding characteristics of the composition. The residual metal from the polymerization process is generally less than about 20 ppm in the PPE and is generally less than about 5 ppm. Low shear rheology is useful for quantifying the blow molding characteristics of thermoplastic compositions. Both the processing temperature and the melt strength of the composition can be calculated from the low shear rheology. The processing temperature is identified as the temperature at which a viscosity of 20,000 poise is achieved at 100 rad/sec. A term, R*, is calculated as a ratio of viscosities at 1 and 100 rad/sec at the processing temperature. Higher R* values are an indication that the resin composition exhibits good shear thinning behavior, which is important in blow molding and thermoforming conversion operations. Thus according to one embodiment of the present invention, the metal salt is added in an amount effective to increase the R* value by at least 50%, and preferably by at least 75% when compared to the same composition not containing an effective amount of the metal salt

Generally the amount of metal salt may vary from about 0.01% preferably 0.05 to about 5% by weight based on the total weight of the composition. The preferred amount is generally between about 0.1% by weight and 2% by weight based on the weight of the total composition. The exact amount used will depend, among other considerations, on the end-use requirements for the composition, the PPE:polyamide ratio, resin content in the composition and the amine end-group concentration of the polyamide employed in the composition.

The compositions of the present invention may also contain at least one impact modifier. The preferred impact modifiers are block (typically diblock, triblock or radial teleblock) copolymers of alkenyl aromatic compounds and dienes. Most often at least one block is derived from styrene and at least one block from at least one of butadiene and isoprene. Especially preferred are the triblock and diblock copolymers comprising polystyrene blocks and diene derived blocks wherein the aliphatic unsaturation has been preferentially removed with hydrogenation. Mixtures of various copolymers are also sometimes useful. The weight average molecular weights of the impact modifiers are typically in the range of about 50,000 to 300,000. Block copolymers of this type are commercially available from Shell Chemical Company under the trademark KRATON, and include Kraton D1101, D1102, G1650, G1651, G1652, G1701 and G1702.

Another class of impact modifiers is derived from conjugated dienes. While copolymers containing conjugated dienes have been discussed above, additional conjugated diene modifier resins include, for example, homopolymers and copolymers of one or more conjugated dienes including, for example, polybutadiene, butadiene-styrene copolymers, isoprene-isobutylene copolymers, chlorobutadiene polymers, butadiene-acrylonitrile copolymers, polyisoprene, and the like. Ethylenepropylene-diene monomer rubbers (EPDM's) may also be used. They are typified as comprising predominantly ethylene units, a moderate amount of propylene units and up to about 20 mole percent of non-conjugated diene monomer units. The impact modifier may also contain reactive groups such as, for example, acid, oxazoline, ortho-ester, amino, epoxy, or anhydride.

The amount of the impact modifier generally present, when one is used, is in the range of about 1% to about 15% by weight based on the total weight of the composition. The preferred range is about 1% to about 10% and the most preferred range is about 3% to about 8% by weight; based on the total weight of the composition.

The compositions of the present invention may also contain a flow promoter, for example, at least one polymer of an alkenylaromatic compound. Suitable polymers of this type may be prepared by methods known in the art including bulk, suspension and emulsion polymerization. They generally contain at least 25% by weight of structural units derived from an alkenylaromatic monomer of the formula (IV): 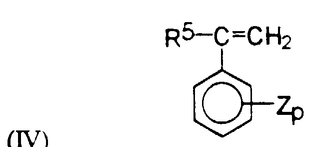 wherein R⁵ is hydrogen, lower alkyl or halogen; Z is vinyl, halogen or lower alkyl; and p is from 0 to 5. These resins include homopolymers of styrene, chlorostyrene and vinyltoluene, random copolymers of styrene with one or more monomers illustrated by acrylonitrile, butadiene, α-methylstyrene, ethylvinylbenzene, divinylbenzene and maleic anhydride, and rubber-modified polystyrenes comprising blends and grafts, wherein the rubber is a polybutadiene or a rubbery copolymer of about 98-78% styrene and about 2-32% diene monomer. These rubber modified polystyrenes include high impact polystyrene (commonly referred to as HIPS).

The amount of the flow promoter present, when one is used, is in the range of about 0.01% to about 20% by weight based on the total weight of the composition. The preferred range is about 0.01% to about 15% by weight and the most preferred range is about 0.1% to about 12% by weight; based on the total weight of the composition.

The PPE polyamide blend may also comprise at least one reinforcing filler. Suitable reinforcing fillers are those which increase the rigidity of the composition. Amongst these, fibrous materials are preferred, in particular glass fibers made from low alkali E-glass, having a fiber diameter of from 8 to 14 µm, the length of the glass fibers in the finished injection molding being from 0.01 mm to 0.5 mm. The glass fibers may be employed as rovings or as chopped or milled glass fibers, and may be provided with a suitable finish and an adhesion promoter or promoter system based on silanes. The amount of reinforcing fillers is advantageously from about 5% to about 60% by weight, especially from about 10% to about 35% by weight; all based on the total weight of the composition.

However, other fibrous reinforcing materials, e.g. carbon fibers, potassium titanate single-crystal fibers, gypsum fibers, aluminum oxide fibers or asbestos may also be incorporated. Non-fibrous fillers, e.g. glass beads, hollow glass beads, chalks, talcs, micas, quartzes and natural or calcined kaolins are further preferred fillers, as are combinations of these materials, including combinations with glass fibers. Like the glass fibers, these latter fillers may be provided with a finish and/or an adhesion promoter or adhesion promoter system.

Compositions of the present invention can also include effective amounts of at least one additive selected from the group consisting of flame retardants, drip retardants, dyes, pigments, colorants, stabilizers, antistatic agents, plasticizers and lubricants. These additives are known in the art, as are their effective levels and methods of incorporation. Effective amounts of the additives vary, widely, but they are usually present in an amount from about 0.1% to 50% by weight, based on the weight of the entire composition.

PPE-polyamide blends can be prepared by a variety of methods involving intimate admixing of the materials with any additional additives desired in the formulation. Suitable procedures include solution blending and melt blending. Because of the availability of melt blending equipment in commercial polymer processing facilities, melt processing procedures are generally preferred. Examples of equipment used in such melt compounding methods include: co-rotating and counter-rotating extruders, disc-pack processors and various other types of extrusion equipment. In some instances, the compounded material exits the extruder through small exit holes in a die and the resulting strands of molten resin are cooled by passing the strands through a water bath. The cooled strands can be chopped into small pellets for packaging and further handling.

All of the ingredients may be added initially to the processing system, or else certain additives may be precompounded with each other or with one of the primary polymer components, PPE and polyamide. It appears that certain properties, such as impact strength and elongation, are sometimes enhanced by initially precompounding the PPE with at least one of the typical agents used to functionalize PPE prior to blending with the polyamide. It also appears that some physical properties can be enhanced by adding the metal salt to the composition after at least some of the compatibilizing PPE and polyamide have been mixed. While separate extruders may be used in the processing, these compositions may also be prepared by using a single extruder having multiple feed ports along its length to accommodate the addition of the various components. It is also sometimes advantageous to employ at least one vent port in each section between the feed ports to allow venting (either atmospheric or vacuum) of the melt Those of ordinary skill in the art will be able to adjust blending times and temperatures, as well as component addition, without undue experimentation.

It should also be clear that improved molded articles prepared from the compositions of the present invention represent an additional embodiment of this invention.

The following examples are provided to illustrate some embodiments of the present invention. They are not intended to limit the invention in any aspect All percentages are by weight based on the total weight of the entire composition, unless otherwise indicated and all parts are parts by weight.

### EXAMPLES

The compositions of Tables 1, 2, 3, and 4 were extruded on a Werner-Pfleiderer twin-screw extruder using a set temperature of about 600°F and a vacuum of 10-20 inches Hg applied to the melt during compounding. The resultant compositions were molded using a Toshiba injection molding machine using a temperature set of about 600°F and a mold temperature of about 150°F. Samples of the compositions were also subjected to measurement of notched Izod impact strength according to ASTM D256 (employing a sample size of 2.5 inch by 0.5 inch by 0.125 inch), Dynatup strength (energy to fracture falling dart test) according to ASTM D3763 (using 4 inch diameter by 0.125 inch disks) and tensile yield and tensile elongation at break according to ASTM D638.

Low shear rheology was used for calculating both the processing temperature and the melt strength of the compositions. The processing temperature was identified as the temperature at which a viscosity of 20,000 poise is achieved at 100 rad/sec. R* was calculated as a ratio of viscosities at 1 and 100 rad/sec at the processing temperature. Higher R* values is an indication that the resin composition exhibits good shear thinning behavior, which is important in blow molding and thermoforming conversion operations. Blow ratio in Table 2 was determined by extruding a 12 inch tube from a single screw extruder followed by blowing out the molden tube using nitrogen at about a one cubic foot hour rate until the tube bursts. The ranking is qualitatively determined by the volume change at burst An increase in volume of at least 30% is meaningful for increasing the ranking from bad to good or good to better.

**Table 1**

| **Sample:** | **1** | **2** | **3** | **4** |
|---|---|---|---|---|
| PPE | 35 | 35 | 40 | 40 |
| PA6 | 55 | 55 | 50 | 50 |
| SBS IM | 10 | 10 | 10 | 10 |
| Citric acid | 0.6 | 0.6 | 0.6 | 0.6 |
| Stabilizers | 0.5 | 0.5 | 0.5 | 0.5 |
| Carbon black | 0.2 | 0.2 | 0.2 | 0.2 |
| Glass fiber | 12 | 12 | 12 | 12 |
| Zinc stearate | 0 | 0.3 | 0 | 0.3 |

| **Properties:** | | | | |
|---|---|---|---|---|
| NI | 2.58 | 2.60 | 2.49 | 2.55 |
| Flexural str. | 19,940 | 20,350 | 18,710 | 19,460 |
| Flexural mod. | 568 | 578 | 564 | 573 |
| HDT | 405 | 403 | 404 | 402 |
| R* | 3.9 | 8.2 | 4.9 | 9.4 |
| Processing T | 251 | 274 | 286 | 270 |
| PPE is 0.46 I.V. poly(2,6-dimethylphenylene oxide) with a residual copper level from the polymerization catalyst of less than about 10 ppm; PA6 is nylon 6; SBS IM is KRATON D1101 ; stabilizers are 0.3 parts ULTRANOX 257 and 0.2 parts potassium iodide; NI is notched Izod in ft-lbs/in; Flexural str. is flexural strength in psi; flexural mod. is flexural modulus in Kpsi; HDT is heat distortion temperature of a 1/4 inch thick specimen measured at a load of 66 psi, reported in °F; R* is as previous defined; Processing T is processing temperature as previously defined. | | | | |

The data in Table 1 illustrate the enhanced melt strength of PPE/polyamide 6 compositions with the addition of a multi-valent metal salt, in these examples, zinc stearate. Comparison of the control sample without the metal salt (sample 1) to the same composition containing the metal salt (sample 2) reveals a surprising and dramatically improved R* value for sample 2. Similar surprising improvements in physical properties were obtained for compositions containing a lower level of polyamide 6 (samples 3 and 4).

**Table 2**

| **Sample:** | **5** | **6** | **7** | **8** |
|---|---|---|---|---|
| PPE | 35 | 35 | 40 | 40 |
| PA6,6 | 55 | 55 | 60 | 60 |
| SBS IM | 10 | 10 | 10 | 10 |
| Citric acid | 0.6 | 0.6 | 0.6 | 0.6 |
| Stabilizers | 0.5 | 0.5 | 0.5 | 0.5 |
| Carbon black | 0.2 | 0.2 | 0.2 | 0.2 |
| Glass fiber | 12 | 12 | 12 | 12 |
| Magnesium oxide | 0 | 0.1 | 0 | 0.1 |

| **Properties:** | | | | |
|---|---|---|---|---|
| NI | 1.81 | 1.90 | 1.83 | 1.97 |
| Flexural str. | 21,270 | 20,595 | 20,800 | 20,825 |
| Flexural mod. | 591 | 593 | 591 | 591 |
| HDT | 476 | 477 | 475 | 479 |
| Blow Ratio | good | better | good | better |
| PPE is 0.46 I.V. poly(2,6-dimethylphenylene oxide) with a residual copper level from the polymerization catalyst of less than about 10 ppm; PA6 is nylon 6,6; SBS IM is KRATON D1101 ; stabilizers are 0.3 parts ULTRANOX 257 and 0.2 parts potassium iodide; NI is notched Izod in ft-lbs/in; Flexural str. is flexural strength in psi; flexural mod. is flexural modulus in Kpsi; HDT is heat distortion temperature of a 1/4 inch thick specimen measured at a load of 66 psi, reported in °F; Blow ratio determined at 275°F extrusion set temperatures. | | | | |

The data in Table 2 illustrate the enhanced melt strength of PPE/polyamide 6,6 compositions with the addition of a multi-valent metal salt, in these examples magnesium oxide. Comparison of the control sample without the metal salt (sample 5) to the same composition containing the metal salt (sample 6) reveals the improved blow ratio for sample 5. Similar surprising improvements in physical properties were obtained for compositions containing a higher level of polyamide 6,6 (samples 7 and 8).

**Table 3**

| **Sample** | **9** | **10** |
|---|---|---|
| PPE | 35 | 35 |
| PA6 | 55 | 55 |
| SBS IM | 10 | 10 |
| Citric acid | 0.6 | 0.6 |
| Stabilizers | 0.5 | 0.5 |
| Carbon black | 0.1 | 0.1 |
| Magnesium oxide | 0 | 0.2 |
| glass fibers | 43 | 43 |

| **Properties** | | |
|---|---|---|
| Flex Modulus | 1014 | 1029 |
| Flex strength | 29,630 | 30,120 |
| HDT | 412 | 410 |
| Rheology 100^{s-1} | 16,278 | 18,235 |
| 1500^{s-1} | 4049 | 4103 |
| PPE is 0.46 I.V. poly(2,6-dimethylphenylene oxide) with a residual copper level from the polymerization catalyst of less than about 10 ppm; PA6 is nylon 6; SBS IM is KRATON D1101; stabilizers are 0.3 parts ULTRANOX 257 and 0.2 parts potassium iodide; NI is notched Izod in ft-lbs/in; Flexural str. is flexural strength in psi: flexural mod. is flexural modulus in Kpsi; HDT is heat distortion temperature of a 1/4 inch thick specimen measured at a load of 66 psi, reports in F°; Rheology was measured on Instron Capillary Rheometer (Model 3211) at a temperature was 280°Cand is given in poise. | | |

The data in Table 3 illustrate the enhanced low shear viscosity with the addition of a multi-valent metal salt Comparison of the control sample without the metal salt (sample 9) to the same composition containing the metal salt (sample 10) reveals the significantly improved low shear viscosity of sample 10.

**Table 4**

| **Sample** | **11** | **12** | **13** | **14** |
|---|---|---|---|---|
| PPE | 50 | 50 | 50 | 50 |
| PA6 | 40 | 40 | 40 | 40 |
| SEP IM | 10 | 10 | 10 | 10 |
| Citric acid | 0.6 | 0.6 | 0.6 | 0.6 |
| Stabilizers | 0.45 | 0.45 | 0.45 | 0.45 |
| Magnesium Carbonate | 0 | 0.1 | 0.2 | 0.3 |

| **Properties** | | | | |
|---|---|---|---|---|
| Torque | 1582 | 1610 | 1680 | 1540 |
| Temperature | 296 | 299 | 302 | 301 |
| PPE is 0.46 I.V. poly(2,6-dimethylphenylene oxide) with a residual copper level from the polymerization catalyst of less than about 10 ppm; PA6 is nylon 6; SEP IM is KRATON G1702; stabilizers are 0.3 parts ANOX PP10, 0.1 parts potassium iodide, and 0.05 parts cupric iodide; Torque measured using Brabender mixing bowl at 100 RPM. Torque is in Newton-meters, temperature is in °C. | | | | |

Sample 11 was prepared via extrusion and used to prepare samples 12, 13, and 14 in a brabender bowl.

For torque measurements 150 grams of pellets (sample 11) were placed in the mixing bowl with a set temperature of 290°C.

The data in Table 4 further illustrate the enhanced low shear viscosity with the addition of a multi-valent metal salt, in these examples, magnesium carbonate. Comparison of the control sample without the metal salt (sample 11) to the compositions containing the metal salt (samples 12-14) reveals the improved low shear viscosity. In this series, sample 14 illustrates an excessive amount of magnesium carbonate such that the metal salt is no longer in an effective amount for enhancing the low shear viscosity and hence, the melt strength of the composition.

## Claims

1. A composition comprising:
(a) a poly(phenylene ether) resin;
(b) a polyamide resin;
(c) a compatibilizer for components (a) and (b); and
(d) an amount of a multi-valent metal salt effective for enhancing the melt strength of the composition.

2. The composition of Claim 1, wherein the metal salt is a metal oxide or a metal salt of an organic acid.

3. The composition of claim 1 or claim 2, wherein the metal salt is added in an amount effective to increase the R* value by at least about 15% when compared to the same composition without the metal salt, or is added in an amount effective to increase the blow ratio by at least about 30% when compared to the same composition without the metal salt or is added in an amount effective to increase the viscosity measured at 100^{s-1} at 280°C by at least 8% when compared to the same composition without the metal salt.

4. The composition of Claim 1, wherein the compatibilizer is:
(A) at least one compound having both:
(i) a carbon-carbon double bond or a carbon-carbon triple bond, and
(ii) a carboxylic acid, acid anhydride, acid amide, imido, carboxylic acid ester, epoxy, amino, hydroxyl or carboxylic acid ammonium salt;
(B) a non-polymeric carboxylic acid or a derivative of a non-polymeric carboxylic acid; or
(C) a compatibilizing poly(phenylene ether) resin.

5. The composition of Claim 4 wherein the weight ratio of the poly(phenylene ether) resin to the polyamide resin is from about 20:80 to about 80:20.

6. The composition according to Claim 1, further comprising at least one reinforcing filler present in an amount from about 5% to about 60% by weight based on the total weight of the entire composition; wherein the reinforcing filler is selected from the group consisting of glass fibers, talcs, micas, kaolins, carbon fibers, gypsum fibers, single crystal fibers, and mixtures of the foregoing.

7. The composition of Claim 1 further comprising an impact modifier; wherein the impact modifier comprises a block copolymer of alkenyl aromatic compounds and dienes present in an amount from about 1% to about 15% by weight based on the total weight of the entire composition.

8. The composition according to Claim 1, further comprising a flow promoter.

9. The composition according to Claim 8 wherein the flow promoter is selected from the group consisting of polystyrene and high impact polystyrene and is present in an amount from about 1% to about 20% by weight based on the total weight of the entire composition.

10. The composition of claim 4, wherein the compatibilizing agent is selected from citric acid, fumaric acid, maleic anhydride, and derivatives of any of the foregoing or a compatibilizing poly(phenylene ether) resin comprising a poly(phenylene ether) resin functionalized with a species selected from the group consisting of amino, hydroxy, oxazoline ortho-ester, carboxylic acid, epoxy and anhydride.

11. A method for increasing the R* value of a poly(phenylene ether) resin / polyamide resin composition comprising:
intimately admixing a poly(phenylene ether) resin, a polyamide resin, and a compatibilizer for the poly(phenylene ether) resin and the polyamide resin with an amount of a multi-valent metal salt effective for enhancing the melt strength of the composition.
